# EUROPEAN PATENT SPECIFICATION

(11) **EP 3 120 598 B1**
(45) Date of publication and mention of the grant of the patent: **18.08.2021**
(21) Application number: 14711495.3
(22) Date of filing: 18.03.2014
(51) Int. Cl.: H04W 24/02, H04W 84/18

(54) **METHOD AND NETWORK ELEMENT FOR IMPLEMENTING POLICIES IN A MOBILE NETWORK**
VERFAHREN UND NETZWERKELEMENT ZUR IMPLEMENTIERUNG VON RICHTLINIEN IN EINEM MOBILEN NETZWERK
PROCÉDÉ ET ÉLÉMENT DE RÉSEAU POUR METTRE EN OEUVRE DES POLITIQUES DANS UN RÉSEAU MOBILE

(43) Date of publication of application: 25.01.2017
(73) Proprietor: Nokia Solutions and Networks Oy, 02610 Espoo (FI)
(72) Inventor: RAISANEN, Vilho, Ilmari, 00790 Helsinki (FI)
(74) Representative: Nokia EPO representatives
(86) International application number: PCT/EP2014/055397
(87) International publication number: WO 2015/139735

(56) References cited:
- WO-A1-2013/124435
- LARS CHRISTOPH SCHMELZ ET AL: "A coordination framework for self-organisation in LTE networks", INTEGRATED NETWORK MANAGEMENT (IM), 2011 IFIP/IEEE INTERNATIONAL SYMPOSIUM ON, IEEE, 23 May 2011 (2011-05-23), pages 193-200, XP032035479, DOI: 10.1109/INM.2011.5990691 ISBN: 978-1-4244-9219-0
- DIEZ ALBALADEJO A ET AL: "Unified policy management in Next Generation Networks", ULTRA MODERN TELECOMMUNICATIONS&WORKSHOPS, 2009. ICUMT '09. INTERNATIONAL CONFERENCE ON, IEEE, PISCATAWAY, NJ, USA, 12 October 2009 (2009-10-12), pages 1-8, XP031574347, ISBN: 978-1-4244-3942-3
- "3rd Generation Partnership Project; Technical Specification Group Services and System Aspects; Telecommunication management; Compliance of 3GPP SA5 specifications to the NGMN Top Operational Efficiency (OPE) Recommendations (Release 12)", 3GPP STANDARD; 3GPP TR 32.838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG5, no. V0.6.0, 26 February 2014 (2014-02-26), pages 1-59, XP050769529, [retrieved on 2014-02-26]
- None

## Description

### Field of invention

The present invention relates to a method for implementing policies in a mobile network with at least one operations and support system and a number of network elements. Furthermore, the invention relates to a network element for a mobile network and to an operations and support system for a mobile network. Finally, the invention relates to a mobile network, comprising at least one operations and support system and a number of network elements connected thereto.

### Art Background

Lars Christoph Schmelz et al: "A coordination framework for self-organisation in LTE networks", International Symposium on Integrated Network Management, IEEE, 2011-05-23, pages 193-200, XP032035479 distinguishes between policies at the operator level, the cell level, the SON function level, and the SON Coordinator level. For example, the cell-specific policy formulates a tailored cell-specific version of the operator policy.

Diez Albaladejo A. et al: "Unified policy management in Next Generation Networks", International Conference on Ultra Modern Telecommunications & Workshops, 2009-10-12, pages 1-8, XP0315734347 discloses a common policy description language and a unified repository that can be used in the different NGN layers to facilitate policy enforcement and deployment.

In self-organizing networks (SON), policies are used for enabling network elements (NE) and the operations and support system (OSS) to autonomously perform pre-defined operations, for example belonging to classes of self-configuration, self- optimization, and self-healing. One aspect of a self- organizing network is to perform configuration loops in network elements themselves so that they observe their own key performance indicators (KPIs) and themselves execute policies to react to predefined situations.

For that reason and as disclosed in the above references, distributed policies are created centrally in the operations and support system and deployed to network elements. Policy bases are created by expert personnel, which is costly and makes changing of the policies costly and time- consuming.

This problem is exacerbated by the probable prominent role of machine learning in cognitive networks. Machine learning can identify correlations in data which can be formulated as implications, the latter having the same formal appearance as human-created policies.

There may be a need for an improved method for implementing policies in a mobile network. Particularly, an easier way to create consistent policy bases is desired. In addition the consistency of automatically generated implications with human-created policies shall to be verified.

### Summary of the Invention

The need to ensure consistency of policies may be met by the subject matter according to the independent claims. Advantageous embodiments of the present invention are described by the dependent claims.

According to a first aspect of the invention there is provided a method as disclosed in the opening paragraph, for implementing policies in a Self-Organizing mobile network with at least one operations and support system and a number of network elements connected thereto, a wherein set of human-created policies augmented by means of machine learning is validated separately for each network element, for which said policy set is relevant, and the validation is done based on a policy base with a number of policies of said network element and a system state which is defined by a number of system variables of said network element, and wherein in a first step the consistency of the policies of said policy base is checked without system variables and in a second step the consistency of said policies is checked with respect to current system state, characterized in that the operations and support system sends a validation algorithm to said network element, and said network element validates said policy set by means of the received validation algorithm on request of the operations and support system.

According to a further aspect of the invention there is provided a network element for a Self-Organizing mobile network, the network element comprises a means for validating a set of human-created policies augmented by means of machine learning, the validation being done based on a policy base with a number of policies of said network element and a system state which is defined by a number of system variables of said network element, and wherein in a first step the consistency of the policies of said policy base is checked without system variables and in a second step the consistency of said policies is checked with respect to current system state, characterized in that the network element further comprises a means for receiving a validation algorithm from an operations and support system of said mobile network and validating said policy set by means of the received validation algorithm on request of the operations and support system.

According to a further aspect of the invention there is provided an operations support system for a Self-Organizing mobile network, characterized in that the operations and support system comprises a means for sending a validation algorithm to a network element connected to the operations and support system, so that the network element can validate a set of human-created policies augmented by means of machine learning, wherein: the validation is done based on a policy base with a number of policies of said network element and a system state which is defined by a number of system variables of said network element; in a first step the consistency of the policies of said policy base is checked without system variables and in a second step the consistency of said policies is checked with respect to current system state; and the validation is done by means of the received validation algorithm on request of the operations and support system.

According to yet another aspect of the invention there is provided a Self-Organizing mobile network as disclosed in the opening paragraph, comprising at least one operations and support system and a number of network elements connected thereto the mobile network comprising a means for validating a policy set of human-created policies augmented by means of machine learning separately for each network element, for which said policy set is relevant, wherein the validation is done based on a policy base with a number of policies of said network element and a system state which is defined by a number of system variables of said network element, and wherein in a first step the consistency of the policies of said policy base is checked without system variables and in a second step the consistency of said policies is checked with respect to current system state, characterized in that the operations and support system sends a validation algorithm to said network element, and said network element validates said policy set by means of the received validation algorithm on request of the operations and support system.

These aspects of the invention are based on the idea that validation of a policy base is performed network element by network element, considering the policy set for a network element as one logical domain. Accordingly, policy bases need not to be entirely created by expert personnel necessarily. Thus a mobile network may be operated with less effort.

Generally, validation may be performed for example, upon addition of a policy or correlation, a significant change in system status, or in the course of periodical verification of policies relevant to a network element.

According to a further aspect of the invention the validation is done based on a policy base of said network element and a system state said network element. Accordingly, a mobile network may comprise means for validation based on a policy base of said network element and a system state of said network element. In this way, a comprehensive validation of a policy set respective a policy base may be performed. An example for the system state (variable) is the system time, which may impact the triggering of policies in the network element (e.g. energy saving). Generally, the quality of the validation is improved the more system variables are used in validation. The invention is not limited to the system state (variables) of the network element, but further system variables of the operations and support system can be employed in the validation.

According to another aspect in the context above, in a third step the consistency of said policies is checked with respect to potential system states. In this way, future implications of the policies in the policy base on the network can be assessed respectively estimated. Furthermore, the policies may be interpreted as Horn clauses. A Horn clause is a logical formula in mathematical logic and logic programming. Advantageously, Horn clauses can lead to greater efficiency in proving a policy set.

It should be noted at this point, that "validation code" in the context of the invention generally is used in the meaning of "validation algorithm". In other words, the validation code is a program or function performing validation. The validation code may be an executable program or code to be interpreted for example.

According to a another aspect of the invention the operations and support system requests the policy base and the system state from said network element and validates said policy set by means of the received policy base and the received system state. Alternatively, said network element uploads its policy base and system state to the operations and support system and the operations and support system validates said policy set on request of said network element. According to these aspects, a mobile network may comprise means for exchanging a policy base of said network element and a system state of said network element between the operations and support system and the network element. Advantageously, the network element again needs not to store or execute the validation code but can upload its policy base and system state to the operations and support system instead. In this case, validation takes place in the operations and support system, either on request of the network element or on request of the operations and support system.

Furthermore, a policy set may automatically be augmented by means of machine learning. In this way, just comparably simple policies have to be entered by humans. Generally, a set of policies may comprise both human-created and automatically generated policies.

According to a further aspect of the invention there is provided a method, wherein on identifying an inconsistent policy set the last addition to the policy base is removed and in a further step the policy base is revalidated. In this way, stability of the processes running in the mobile network is not put at risk. If the policy base is found to be inconsistent, most recently added entries are removed one by one until policy base is consistent. Removals can be performed either in strict temporal order, or by removing automatically created correlations before removing human-created policies. A time stamp indicating last successful validation may be used for switching from correlation removal to deleting human-created policies.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited. The scope of protection is defined by the appended claims.

### Brief Description of the Drawing

Figure 1 shows a simplified mobile network with a operations and support system and a number of network elements;
Figure 2 shows a network element of Fig. 1 in detail;
Figure 3 shows the interaction between the operations and support system and network elements; and
Figure 4 shows possible control loops running in the mobile network.

### Detailed Description

The illustration in the drawing is schematically. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

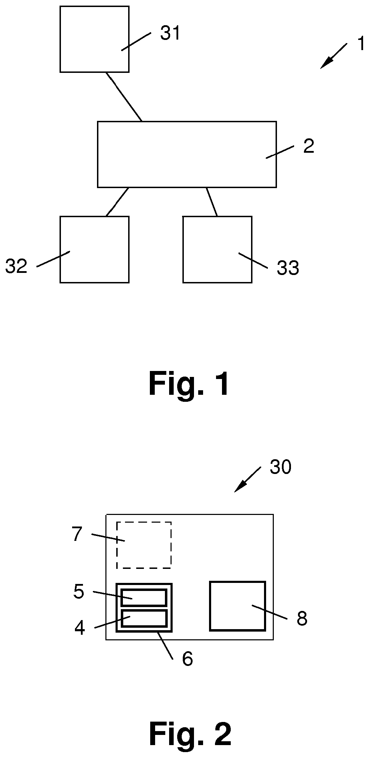

Figure 1 shows an exemplary mobile network 1, comprising at least one operations and support system 2 and a number of network elements 31..33 connected thereto. Generally, the operations and support system 2 and the network elements 31..33 comprise means for exchange data. The mobile network 1 also comprises means for receiving a policy set and means 7 for validating a policy set separately for each network element 31..33, for which said policy set is relevant. It should be noted, that a mobile network 1 may of course comprise more operations and support systems 2 and network elements 31..33 than shown in Fig. 1.

Fig. 2 shows an exemplary network element 30 in more detail. The network element 30 comprises a policy base 4 with a number of policies and a system state 5, which usually is defined by a number of system variables. The policy base 5 and the system state (variables) 5 form a knowledge model 6. Furthermore the network element 30 comprises an optional validation code / validation module 7 and an optional machine learning module 8. Of course, a real network element 30 comprises more entities than shown, for example sending and receiving means, etc. However, for the sake of brevity just entities relevant for the invention are shown in Fig. 2.

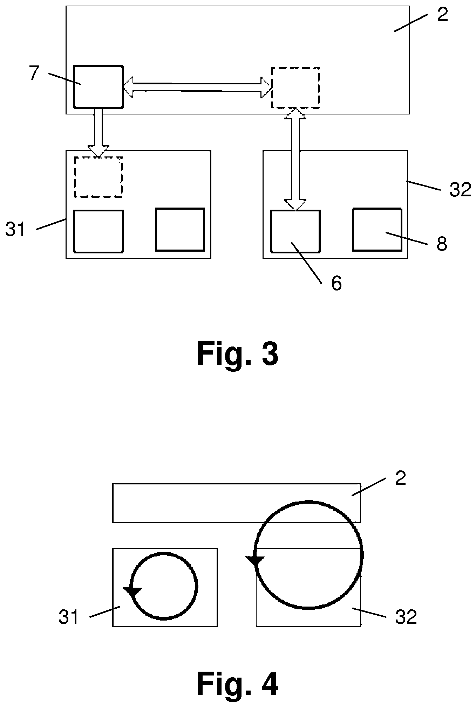

The function of the mobile network 1 is now explained by means of Fig. 3, which shows a operations and support system 2 and two network elements 31 and 32 connected thereto.

Generally, a policy set is validated separately for each network element 30..33, for which said policy set is relevant, in the disclosed method for implementing policies in a mobile network 1.

Validation advantageously is done based on the policy base 4 of said network element 30..33 and a system state 5 of said network element 30..33. Accordingly, the mobile network 1 may comprise means for validation based on a policy base 4 of said network element 30..33 and a system state 5 of a network element 31, 32.

In a first embodiment, a network element 31, 32 validates a policy set without data exchange with the operations and support system 2. Advantageously, no data traffic is caused in the mobile network 1 by the validation of a policy base 4. Thus, the network element 31, 32 itself comprises means for validating its policy base 4, i.e. the validation code / validation module 7.

In a second embodiment the operations and support system 2 sends the validation code 7 to said network element 31, and said network element 31 validates said policy set by means of the received validation code 7 on request of the operations and support system 2. This case is shown on the left side of Fig. 3.

In a third very familiar embodiment, the network element 31 requests a validation code 6 from the operations and support system 2 and validates said policy set by means of the received validation code 7 (see also left side of Fig. 3).

Hence, in the second and third embodiment the network element 31 comprises means for receiving the validation code 7 from the operations and support system 2 and the operations and support system 2 comprises means for sending the validation code 7 to the network element 31. More generally, the mobile network 1 comprises means for exchanging the validation code 7 between the operations and support system 2 and a network element 31.

Advantageously, the network element 31 needs not to store the validation code 7 but can download it from the operations and support system 2 instead in the second and third embodiment. However, validation as such takes place in the network element 31, either on request of the operations and support system 2 (embodiment 2) or on request of the network element 31 (embodiment 3).

In a fourth embodiment, the operations and support system 2 requests the policy base 4 and the system state 5 from the network element 32 and validates said policy set by means of the received policy base 4 and the received system state 5 (and by means of the validation code 7 stored in the operations and support system 2). This case is shown on the right side of Fig. 3.

In a fifth very familiar embodiment, the network element 32 uploads its policy base 4 and system state 5 to the operations and support system 2, and the operations and support system 2 validates said policy set on request of said network element 32 (see also right side of Fig. 3).

Hence, in the fourth and fifth embodiment the network element 32 comprises means for sending the policy base 4 and system state 5 to the operations and support system 2 and the operations and support system 2 comprises means for receiving the policy base 4 and system state 5 from the network element 32. More generally, the mobile network 1 comprises means for exchanging the policy base 4 and system state 5 between the operations and support system 2 and the network element 32.

Advantageously, the network element 32 again needs not to store the validation code 7 in the fourth and fifth embodiment but can upload its policy base 4 and system state 5 to the operations and support system 2 instead. Validation takes place in the operations and support system 2, either on request of the operations and support system (embodiment 4) or on request of the network element 32 (embodiment 5).

As shown in Fig. 3, the mobile network 1 respectively the operations and support system 2 and the network elements 31, 32 of course may comprise both, means for exchanging a policy base 4 and a system state 5 of said network element 30..33 between the operations and support system 2 and a network element 30..33 and/or means for exchanging a validation code 7 between the operations and support system 2 and a network element 30..33. Accordingly, validation may take place in different ways in one and the same network 1, simultaneously and/or at different places.

Generally, validation may be done in different steps, independent of whether it takes place in the operations and support system 2 or the network elements 30..33. Advantageously, in a first step the consistency of the policies of said policy base 4 is checked without system variables and in a second step the consistency of said policies is checked with respect to current system state 5. In this way, validation is done hierarchically. Thus, errors in the policies to be validated may be found easier.

In an optional third step the consistency of said policies is furthermore checked with respect to potential system states. In this way, future implications of the policies in the policy base on the network 1 can be assessed respectively estimated.

To improve efficiency in proving a policy set, the same may be interpreted as a Horn clause. When validation is performed within the operations and support system 2, furthermore the policy base 4 and the system state 5 can be transformed into other relevant models (e.g. RDF/OWL) for evaluation.

Moreover, a policy set may automatically be augmented by means of the machine learning module 8. In this way, just comparably simple policies have to be entered by humans.

To put the stability of the processes running in the mobile network 1 not at risk, an error handling may be provided. For example, on identifying an inconsistent policy set the last addition to the policy base 4 can be removed and in a further step the policy base 4 can be revalidated.

Fig. 4 finally shows possible control loops running in the mobile network 1. As stated before, validation may take place just in the network element 31 (see left side of Fig. 4) or in cooperation with the operations and support system 2 (see right side of Fig. 4).

In order to recapitulate the above described embodiments of the present invention one can state that validation takes place decentralized network element 30..33 by network element 30..33 instead of centrally just in the operations and support system 2.

Finally, it should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 1: mobile network
- 2: operations and support system
- 30..33: network element
- 4: policy base
- 5: system state (variables)
- 6: knowledge model
- 7: validation code / validation module
- 8: machine learning module

## Claims

1. Method for implementing policies in a Self-Orqanizinq mobile network (1) with at least one operations and support system (2) and a number of network elements (30..33) connected thereto,
wherein a set of human-created policies augmented by means of machine learning (8) is validated separately for each network element (30..33), for which said policy set is relevant, and
the validation is done based on a policy base (4) with a number of policies of said network element (30..33) and a system state (5) which is defined by a number of system variables of said network element (30..33), and wherein in a first step the consistency of the policies of said policy base (4) is checked without system variables and in a second step the consistency of said policies is checked with respect to current system state (5),
**characterized in that**:
the operations and support system (2) sends a validation algorithm (7) to said network element (30..33), and said network element (30..33) performs said validation of said policy set by means of the received validation algorithm (7) on request of the operations and support system (2).

2. Method as set forth in claim 1, wherein in a third step the consistency of said policies is checked with respect to potential system states.

3. Method as set forth in claim 1 or 2, wherein the policies are interpreted as Horn clauses.

4. Method as set forth in any one of claims 1 to 3, wherein said network element (30..33) requests a validation algorithm (7) from the operations and support system (2) and validates said policy set by means of the received validation algorithm (7) .

5. Method as set forth in any one of claims 1 to 3, wherein the operations and support system (2) requests the policy base (4) and the system state (5) from said network element (30..33) and validates said policy set by means of the received policy base (4) and the received system state (5).

6. Method as set forth in any one of claims 1 to 3, wherein said network element (30..33) uploads its policy base (4) and system state (5) to the operations and support system (2) and wherein the operations and support system (2) validates said policy set on request of said network element (30..33).

7. Method as set forth in any one of the precedinq claims, wherein on identifying an inconsistent policy set the last addition to the policy base (4) is removed and in a further step the policy base (4) is revalidated.

8. Network element (30..33) for a Self-Orqanizinq mobile network (1), wherein the network element comprises:
a means (7) for validating a set of human-created policies augmented by means of machine learning (8), the validation being done based on a policy base (4) with a number of policies of said network element (30..33) and a system state (5) which is defined by a number of system variables of said network element (30..33), and wherein in a first step the consistency of the policies of said policy base (4) is checked without system variables and in a second step the consistency of said policies is checked with respect to current system state (5),
**characterized in that** the network element (30..33) further comprises:
a means adapted to receive a validation algorithm (7) from an operations and support system (2) of said mobile network (1) and further **characterized in that** said means for validating in the network element (30..33) are adapted to validate said policy set by means of the received validation algorithm (7) on request of the operations and support system (2).

9. Operations and support system (2) for a Self-Organizing mobile network (1), **characterized in that** the operations and support system (2) comprises a means for sending a validation algorithm (7) to a network element (30..33) connected to the operations and support system (2), so that the network element (30..33) can validate a set of human-created policies augmented by means of machine learning (8), wherein:
the validation is done based on a policy base (4) with a number of policies of said network element (30..33) and a system state (5) which is defined by a number of system variables of said network element (30..33),
in a first step the consistency of the policies of said policy base (4) is checked without system variables and in a second step the consistency of said policies is checked with respect to current system state (5), and
the validation is done by means of the received validation algorithm (7) on request of the operations and support system (2).

10. A Self-Organizing mobile network (1), comprising at least one operations and support system (2) and a number of network elements (30..33) connected thereto, wherein each of said network elements (30..33) (1) comprises a means adapted to validate a policy set of human-created policies augmented by means of machine learning (8) separately for each network element (30..33), for which said policy set is relevant, wherein the validation is done based on a policy base (4) with a number of policies of said network element (30..33) and a system state (5) which is defined by a number of system variables of said network element (30..33), and wherein in a first step the consistency of the policies of said policy base (4) is checked without system variables and in a second step the consistency of said policies is checked with respect to current system state (5),
**characterized in that**:
the operations and support system (2) is adapted to send a validation algorithm (7) to said network element (30..33), and said network element (30..33) is adapted to perform said validation of said policy set by means of the received validation algorithm (7) on request of the operations and support system (2).

11. Mobile network (1) as set forth in claim 10, comprising means for exchanging
- a policy base (4) of said network element (30..33) and a system state (5) of said network element (30..33) and/or
- a validation algorithm (7) for validation between the operations and support system (2) and a network element (30..33).

## Patentansprüche

1. Verfahren zur Implementierung von Richtlinien in einem selbstorganisierenden mobilen Netzwerk (1) mit mindestens einem Betriebs- und Unterstützungssystem (2) und einer Anzahl von damit verbundenen Netzwerkelementen (30..33),
wobei ein Satz von menschlich geschaffenen Richtlinien, die durch maschinelles Lernen (8) erweitert werden, für jedes Netzwerkelement (30..33) getrennt validiert wird, für das dieser Satz von Richtlinien relevant ist, und
die Validierung auf der Grundlage einer Richtlinienbasis (4) mit einer Anzahl von Richtlinien dieses Netzwerkelements (30..33) und eines Systemstatus (5) erfolgt, der durch eine Anzahl von Systemvariablen dieses Netzwerkelements (30..33) definiert ist, und wobei in einem ersten Schritt die Kohärenz der Richtlinien dieser Richtlinienbasis (4) ohne Systemvariablen geprüft wird und in einem zweiten Schritt die Kohärenz dieser Richtlinien in Bezug auf den aktuellen Systemstatus (5) geprüft wird,
**dadurch gekennzeichnet, dass**:
das Betriebs- und Unterstützungssystem (2) einen Validierungsalgorithmus (7) an dieses Netzwerkelement (30..33) sendet, und dass dieses Netzwerkelement (30..33) diese Validierung dieses Satzes von Richtlinien über den empfangenen Validierungsalgorithmus (7) auf Anforderung des Betriebs- und Unterstützungssystems (2) ausführt.

2. Verfahren nach Anspruch 1, wobei in einem dritten Schritt die Kohärenz dieser Richtlinien in Bezug auf potenzielle Systemstatus geprüft wird.

3. Verfahren nach Anspruch 1 oder 2, wobei die Richtlinien als Horn-Klauseln ausgelegt werden.

4. Verfahren nach einem der Ansprüche 1 bis 3 wobei dieses Netzwerkelement (30..33) einen Validierungsalgorithmus (7) vom Betriebs- und Unterstützungssystem (2) anfordert und diesen Satz von Richtlinien über den empfangenen Validierungsalgorithmus (7) validiert.

5. Verfahren nach einem der Ansprüche 1 bis 3 wobei das Betriebs- und Unterstützungssystem (2) die Richtlinienbasis (4) und den Systemstatus (5) von diesem Netzwerkelement (30..33) anfordert und diesen Satz von Richtlinien über die empfangene Richtlinienbasis (4) und den empfangenen Systemstatus (5) validiert.

6. Verfahren nach einem der Ansprüche 1 bis 3 wobei dieses Netzwerkelement (30..33) seine Richtlinienbasis (4) und seinen Systemstatus (5) in das Betriebs- und Unterstützungssystem (2) hochlädt und wobei das Betriebs- und Unterstützungssystem (2) diesen Satz von Richtlinien auf Anforderung dieses Netzwerkelements (30..33) validiert.

7. Verfahren nach einem der vorstehenden Ansprüche, wobei nach Identifizierung eines inkonsequenten Satzes von Richtlinien die letzte Ergänzung zur Richtlinienbasis (4) entfernt wird und die Richtlinienbasis (4) in einem weiteren Schritt erneut validiert wird.

8. Netzwerkelement (30..33) für ein selbstorganisierendes mobiles Netzwerk (1), wobei das Netzwerkelement umfasst:
ein Mittel (7) zur Validierung eines Satzes von menschlich geschaffenen Richtlinien, die durch maschinelles Lernen (8) erweitert werden, wobei die Validierung auf der Grundlage einer Richtlinienbasis (4) mit einer Anzahl von Richtlinien dieses Netzwerkelements (30..33) und eines Systemstatus (5) erfolgt, der durch eine Anzahl von Systemvariablen dieses Netzwerkelements (30..33) definiert ist, und wobei in einem ersten Schritt die Kohärenz der Richtlinien dieser Richtlinienbasis (4) ohne Systemvariablen geprüft wird und in einem zweiten Schritt die Kohärenz dieser Richtlinien in Bezug auf den aktuellen Systemstatus (5) geprüft wird,
**dadurch gekennzeichnet, dass** das Netzwerkelement (30..33) weiter umfasst:
ein Mittel, das dafür ausgelegt ist, einen Validierungsalgorithmus (7) von einem Betriebs- und Unterstützungssystem (2) dieses mobilen Netzwerks (1) zu empfangen,
und weiter **dadurch gekennzeichnet, dass** diese Mittel zur Validierung im Netzwerkelement (30..33) dafür ausgelegt sind, diesen Satz von Richtlinien über den empfangenen Validierungsalgorithmus (7) auf Anforderung des Betriebs- und Unterstützungssystems (2) zu validieren.

9. Betriebs- und Unterstützungssystem (2) für ein selbstorganisierendes mobiles Netzwerk (1), **dadurch gekennzeichnet, dass** das Betriebs- und Unterstützungssystem (2) ein Mittel zum Senden eines Validierungsalgorithmus (7) an ein Netzwerkelement (30..33) umfasst, das mit dem Betriebs- und Unterstützungssystem (2) verbunden ist, sodass das Netzwerkelement (30..33) einen Satz von menschlich geschaffenen Richtlinien, die durch maschinelles Lernen (8) erweitert werden, validieren kann, wobei:
die Validierung auf der Grundlage einer Richtlinienbasis (4) mit einer Anzahl von Richtlinien dieses Netzwerkelements (30..33) und eines Systemstatus (5) erfolgt, der durch eine Anzahl von Systemvariablen dieses Netzwerkelements (30..33) definiert ist,
wobei in einem ersten Schritt die Kohärenz der Richtlinien dieser Richtlinienbasis (4) ohne Systemvariablen geprüft wird und in einem zweiten Schritt die Kohärenz dieser Richtlinien in Bezug auf den aktuellen Systemstatus (5) geprüft wird, und
die Validierung über den empfangenen Validierungsalgorithmus (7) auf Anforderung des Betriebs- und Unterstützungssystems (2) ausgeführt wird.

10. Ein selbstorganisierendes mobiles Netzwerk (1) mit mindestens einem Betriebs- und Unterstützungssystem (2) und einer Anzahl von damit verbundenen Elementen (30..33), wobei jedes dieser Netzwerkelemente (30..33) ein Mittel aufweist, das dafür ausgelegt ist, einen Satz von menschlich geschaffenen Richtlinien, die durch maschinelles Lernen (8) erweitert werden, getrennt für jedes Netzwerkelement (30..33) zu validieren, für das dieser Satz von Richtlinien relevant ist, wobei die Validierung auf der Grundlage einer Richtlinienbasis (4) mit einer Anzahl von Richtlinien dieses Netzwerkelements (30..33) und eines Systemstatus (5) erfolgt, der durch eine Anzahl von Systemvariablen dieses Netzwerkelements (30..33) definiert ist, und wobei in einem ersten Schritt die Kohärenz der Richtlinien dieser Richtlinienbasis (4) ohne Systemvariablen geprüft wird und in einem zweiten Schritt die Kohärenz dieser Richtlinien in Bezug auf den aktuellen Systemstatus (5) geprüft wird,
**dadurch gekennzeichnet, dass**:
das Betriebs- und Unterstützungssystem (2) dafür ausgelegt ist, einen Validierungsalgorithmus (7) an dieses Netzwerkelement (30..33) zu senden, und dass dieses Netzwerkelement (30..33) dafür ausgelegt ist, diese Validierung dieses Satzes von Richtlinien über den empfangenen Validierungsalgorithmus (7) auf Anforderung des Betriebs- und Unterstützungssystems (2) auszuführen.

11. Mobiles Netzwerk (1) nach Anspruch 10, wobei das Netzwerk Mittel zum Austausch von Folgendem aufweist:
- einer Richtlinienbasis (4) dieses Netzwerkelements (30..33) und eines Systemstatus (5) dieses Netzwerkelements (30..33) und/oder
- eines Validierungsalgorithmus (7) zur Validierung zwischen dem Betriebs- und Unterstützungssystem (2) und einem Netzwerkelement (30..33).

## Revendications

1. Procédé pour la mise en œuvre de politiques dans un réseau mobile auto-organisateur (1) ayant au moins un système d'opérations et de prise en charge (2) et de nombreux d'éléments de réseau (30..33) connectés à celui-ci,
dans lequel un ensemble de politiques créées par l'homme augmentées au moyen d'un apprentissage machine (8) est validé séparément pour chaque élément de réseau (30..33), pour lequel ledit ensemble de politiques est pertinent, et
la validation est effectuée sur la base d'une base de politiques (4) ayant de nombreuses politiques dudit élément de réseau (30..33) et un état de système (5) qui est défini par de nombreuses variables de système dudit élément de réseau (30..33), et dans lequel, lors d'une première étape, la cohérence des politiques de ladite base de politiques (4) est vérifiée sans variables de système et lors d'une deuxième étape, la cohérence desdites politiques est vérifiée par rapport à un état de système actuel (5),
**caractérisé en ce que** :
le système d'opérations et de prise en charge (2) envoie un algorithme de validation (7) audit élément de réseau (30..33), et ledit élément de réseau (30..33) réalise ladite validation dudit ensemble de politiques au moyen de l'algorithme de validation reçu (7) sur demande du système d'opérations et de prise en charge (2).

2. Procédé selon la revendication 1, dans lequel lors d'une troisième étape, la cohérence desdites politiques est vérifiée par rapport à des états de système potentiels.

3. Procédé selon la revendication 1 ou 2, dans lequel les politiques sont interprétées comme des clauses de Horn.

4. Procédé selon l'une quelconque des revendications 1 à 3, dans lequel ledit élément de réseau (30..33) demande un algorithme de validation (7) au système d'opérations et de prise en charge (2) et valide ledit ensemble de politiques au moyen de l'algorithme de validation reçu (7).

5. Procédé selon l'une quelconque des revendications 1 à 3, dans lequel le système d'opérations et de prise en charge (2) demande la base de politiques (4) et l'état de système (5) audit élément de réseau (30..33) et valide ledit ensemble de politiques au moyen de la base de politiques reçue (4) et de l'état de système reçu (5).

6. Procédé selon l'une quelconque des revendications 1 à 3, dans lequel ledit élément de réseau (30..33) téléverse sa base de politiques (4) et l'état de système (5) vers le système d'opérations et de prise en charge (2) et dans lequel le système d'opérations et de prise en charge (2) valide ledit ensemble de politiques sur demande dudit élément de réseau (30..33).

7. Procédé l'une quelconque des revendications précédentes, dans lequel lors de l'identification d'un ensemble de politiques incohérent, le dernier ajout à la base de politiques (4) est retiré et lors d'une étape ultérieure, la base de politiques (4) est revalidée.

8. Élément de réseau (30..33) pour un réseau mobile auto-organisateur (1), dans lequel l'élément de réseau comprend :
un moyen (7) pour valider un ensemble de politiques créées par l'homme augmentées au moyen d'un apprentissage machine (8), la validation étant effectuée sur la base d'une base de politiques (4) ayant de nombreuses politiques dudit élément de réseau (30..33) et un état de système (5) qui est défini par de nombreuses variables de système dudit élément de réseau (30..33), et dans lequel, lors d'une première étape, la cohérence des politiques de ladite base de politiques (4) est vérifiée sans variables de système et lors d'une deuxième étape, la cohérence desdites politiques est vérifiée par rapport à un état de système actuel (5),
**caractérisé en ce que** l'élément de réseau (30..33) comprend en outre :
un moyen conçu pour recevoir un algorithme de validation (7) à partir d'un système d'opérations et de prise en charge (2) dudit réseau mobile (1)
et **caractérisé en outre en ce que** ledit moyen pour valider dans l'élément de réseau (30..33) est conçu pour valider ledit ensemble de politiques au moyen de l'algorithme de validation reçu (7) sur demande du système d'opérations et de prise en charge (2).

9. Système d'opérations et de prise en charge (2) pour un réseau mobile auto-organisateur (1), **caractérisé en ce que** le système d'opérations et de prise en charge (2) comprend un moyen pour envoyer un algorithme de validation (7) à un élément de réseau (30..33) connecté au système d'opérations et de prise en charge (2), de sorte que l'élément de réseau (30..33) puisse valider un ensemble de politiques créées par l'homme augmentées au moyen d'un apprentissage machine (8), dans lequel :
la validation est effectuée sur la base d'une base de politiques (4) ayant de nombreuses politiques dudit élément de réseau (30..33) et un état de système (5) qui est défini par de nombreuses variables de système dudit élément de réseau (30..33),
lors d'une première étape, la cohérence des politiques de ladite base de politiques (4) est vérifiée sans variables de système et lors d'une deuxième étape, la cohérence desdites politiques est vérifiée par rapport à un état de système actuel (5), et
la validation est effectuée au moyen de l'algorithme de validation reçu (7) sur demande du système d'opérations et de prise en charge (2).

10. Réseau mobile auto-organisateur (1), comprenant au moins un système d'opérations et de prise en charge (2) et de nombreux éléments de réseau (30..33) connectés à celui-ci, dans lequel chacun desdits éléments de réseau (30..33) comprend un moyen conçu pour valider un ensemble de politiques de politiques créées par l'homme augmentées au moyen d'un apprentissage machine (8) séparément pour chaque élément de réseau (30..33), pour lequel ledit ensemble de politiques est pertinent, dans lequel la validation est effectuée sur la base d'une base de politiques (4) ayant de nombreuses politiques dudit élément de réseau (30..33) et un état de système (5) qui est défini par de nombreuses variables de système dudit élément de réseau (30..33), et dans lequel, lors d'une première étape, la cohérence des politiques de ladite base de politiques (4) est vérifiée sans variables de système et lors d'une deuxième étape, la cohérence desdites politiques est vérifiée par rapport à un état de système actuel (5),
**caractérisé en ce que** :
le système d'opérations et de prise en charge (2) est conçu pour envoyer un algorithme de validation (7) audit élément de réseau (30..33), et ledit élément de réseau (30..33) est conçu pour réaliser ladite validation dudit ensemble de politiques au moyen de l'algorithme de validation reçu (7) sur demande du système d'opérations et de prise en charge (2).

11. Réseau mobile (1) selon la revendication 10, comprenant un moyen pour échanger
- une base de politiques (4) dudit élément de réseau (30..33) et un état de système (5) dudit élément de réseau (30..33) et/ou
- un algorithme de validation (7) pour une validation entre le système d'opérations et de prise en charge (2) et un élément de réseau (30..33).
